# EUROPÄISCHE PATENTSCHRIFT

(11) **EP 2 239 469 B1**
(45) Veröffentlichungstag und Bekanntmachung des Hinweises auf die Patenterteilung: **16.07.2014**
(21) Anmeldenummer: 10001253.3
(22) Anmeldetag: 08.02.2010
(51) Int. Cl.: F15B 13/08

(54) **Ventilanordnung**
Valve assembly
Agencement de vannes

(30) Priorität: 08.04.2009 DE 102009016604
(43) Veröffentlichungstag der Anmeldung: 13.10.2010
(73) Patentinhaber: FESTO AG & Co. KG, 73734 Esslingen (DE)
(72) Erfinder: Bogdanowicz, Grzegorz, 73760 Ostfildern (DE); Hesser, Robert, 73240 Wenlingen (DE); Ghimpu-Mundinger, Radu, 71229 Leonberg (DE)
(74) Vertreter: Abel, Martin

(56) Entgegenhaltungen:
- EP-A2- 1 094 260
- WO-A1-2006/105067
- DE-A1- 4 444 024
- DE-A1- 10 351 571
- DE-A1-102006 030 039
- US-A1- 2007 278 436

## Beschreibung

Die Erfindung betrifft eine Ventilanordnung, mit mindestens einem Ventilträger, der eine Bestückungsfläche aufweist und in dem mindestens ein zur Bestückungsfläche ausmündender Ventilträgerkanal verläuft, mit mindestens einem Ventil, das mindestens eine elektrisch aktivierbare Betätigungseinrichtung mit in einer Anschlusszone außen am Ventil angeordneten ersten Steckkontaktmitteln aufweist und das derart in einer Gebrauchsposition an der Bestückungsfläche montierbar ist, dass mindestens ein in ihm verlaufender Ventilkanal mit mindestens einem Ventilträgerkanal verbunden ist und zugleich die ersten Steckkontaktmittel mit zweiten Steckkontaktmitteln in Eingriff stehen, die Bestandteile einer mit elektrischen Leitern verbundenen oder verbindbaren elektromechanischen Steckvorrichtung sind, die auf der der Bestückungsfläche entgegengesetzten Seite eines Wandabschnittes des Ventilträgers am Ventilträger fixiert ist.

Eine aus der DE 10 2006 030 039 A1 bekannte Ventilanordnung dieser Art enthält mehrere aneinandergereihte Ventilträger, die jeweils eine Bestückungsfläche definieren, an der ein elektrisch aktivierbares Ventil lösbar montiert ist. Im Ventil angeordnete Ventilkanäle kommunizieren mit im Ventilträger verlaufenden Ventilträgerkanälen, wobei das Ventil in der Lage ist, die Fluidverbindung zwischen diesen Kanälen zu steuern. Zu seiner elektrischen Aktivierung enthält die Ventilanordnung eine als Elektromagneteinrichtung ausgebildete Betätigungseinrichtung, die mit an einer Ventilunterseite angeordneten Steckkontaktmitteln in elektrischer Verbindung steht. Die Steckkontaktmittel sind in einer Anschlusszone zusammengefasst und ragen nach unten vom Ventil weg, so dass sie mit am Ventilträger angeordneten zweiten Steckkontaktmitteln in Eingriff gelangen, wenn das Ventil in seiner Gebrauchsposition an der Bestückungsfläche montiert wird. Die zweiten Steckkontaktmittel sind Bestandteil einer Steckvorrichtung, die durch einen einen Teilbereich der Bestückungsfläche definierenden Wandabschnitt des Ventilträgers hindurchragt und an einer Leiterplatte befestigt ist, die ihrerseits an Seitenwänden eines im Ventilträger ausgebildeten Innenraumes fixiert ist. Den erforderlichen Zusammenhalt zwischen den ersten und zweiten Steckkontaktmitteln gewährleistet eine zwischen dem Ventil und dem Ventilträger vorhandene Schraubverbindung.

Ein ähnliches Konzept, bei dem allerdings auf einem Ventilträger gleichzeitig mehrere Ventile montierbar sind, offenbart die DE 103 51 571 A1. In diesem Fall sind die mehrfach vorhandenen Steckvorrichtungen an einer Leiterplatte angeordnet, die außen auf den Ventilträger aufgesetzt ist und die über einen Zentralstecker mit einer elektronischen Steuerung verbunden werden kann.

Es existieren andererseits auch Ventilanordnungen, bei denen ein auf einem Ventilträger sitzendes Ventil mittels einer oftmals als Ventilstecker bezeichneten Steckvorrichtung individuell kontaktierbar ist. Die Steckvorrichtung ist in der Regel an einem elektrische Leiter beinhaltenden Kabel angeordnet und kann an die ersten Steckkontaktmittel des Ventils angesteckt werden, die so platziert sind, dass sie von einem zugeordneten Ventilträger nicht verdeckt werden. Eine solche Ventilanordnung ist in der DE 44 44 024 A1 beschrieben. Da bei solchen Anwendungen die Steckkontaktmittel nicht durch das Zusammenwirken von Ventilträger und Ventil gegenseitig fixiert werden, ist eine eigenständige Befestigung der Steckvorrichtungen erforderlich, was mittels Befestigungsschrauben bewerkstelligt wird, die die Steckvorrichtung durchsetzen und in eine Gewindeöffnung eingeschraubt sind, die direkt am Ventil am Bereich der zugeordneten Anschlusszone ausgebildet ist.

Um die Produktvielfalt zu minimieren, wäre es vorteilhaft ein und dieselbe Art von Ventilen sowohl zur Bestückung von Ventilträgern mit integrierten Steckvorrichtungen nutzen zu können - beispielsweise nach dem Vorbild der DE 10 2006 030 039 A1 oder der DE 103 51 571 A1 - als auch eine individuelle elektrische Kontaktierung mittels einer von außen ansteckbaren Steckvorrichtung zu ermöglichen, wie dies beispielsweise in der DE 44 44 024 A1 erläutert ist. Gegenwärtig ist dies nicht möglich, weil die für die Kontaktierung mit internen Steckvorrichtungen des Ventilträgers ausgelegten Ventile in der Anschlusszone keine Gewindeöffnung aufweisen, die das Einschrauben eines zur Fixierung einer individuellen Steckvorrichtung nutzbaren Befestigungsschraube ermöglichen würde.

Zwar wäre es denkbar, konsequent alle Ventile im Bereich ihrer Anschlusszone mit einer entsprechenden Gewindeöffnung auszustatten. Da jedoch in der Praxis nicht alle Ventile dem Erfordernis einer universellen Nutzbarkeit unterliegen, hätte dies einen unnötigen Mehraufwand an Herstellungskosten zur Folge, bei denjenigen Ventilen, die tatsächlich nie mit einer individuellen Steckvorrichtung kontaktiert werden müssen.

Die in der DE 10 2006 030 039 A1 auch noch erwähnte Möglichkeit, ein und dasselbe Ventil mit gleichzeitig zwei alternativ nutzbaren Anschlusszonen auszustatten, ist ebenfalls relativ kostenaufwendig und kann bei Standardventilen, bei denen ein hoher Kostendruck herrscht, nicht angemessen realisiert werden.

Es ist daher die Aufgabe der vorliegenden Erfindung, kostengünstige Maßnahmen zur Ermöglichung einer variablen und dennoch sicheren elektrischen Kontaktierung von Ventilen zu schaffen.

Zur Lösung dieser Aufgabe ist in Verbindung mit den eingangs genannten Merkmalen vorgesehen, dass der besagte Wandabschnitt des Ventilträgers als die Steckvorrichtung unmittelbar tragende Tragwand ausgebildet ist, an deren von der Bestückungsfläche abgewandte Rückseite die Steckvorrichtung angesetzt ist und die in dem in der Gebrauchsposition des Ventils von dessen Anschlusszone überdeckten Bereich mindestens eine Gewindeöffnung aufweist, in die eine Befestigungsschraube eingreift, mittels der die Steckvorrichtung an der Tragwand gehalten ist.

Somit besteht die Möglichkeit, ein und dasselbe Ventil sowohl zur Ausstattung von mit integrierten elektromechanischen Steckvorrichtungen versehenen Ventilträgern zu nutzen als auch eine individuelle Kontaktierung mittels einer durch eine Befestigungsschraube zu fixierenden Steckvorrichtung zu ermöglichen, und zwar ohne Nutzung einer in der Anschlusszone am Ventil ausgebildeten Gewindeöffnung. Eine solche Gewindeöffnung kann zur Einsparung von Herstellungskosten gänzlich entfallen, weil sie für die Fixierung der elektromechanischen Steckvorrichtung nicht benötigt wird. Die zur Fixierung dieser Steckvorrichtung notwendige Gewindeöffnung ist stattdessen in einer bei montiertem Ventil dessen Anschlusszone gegenüberliegenden Tragwand des Ventilträgers ausgebildet, an deren der Bestückungsfläche entgegengesetzte Rückseite die Steckvorrichtung ansetzbar ist, um unter Verwendung einer in die Gewindeöffnung einschraubbaren Befestigungsschraube direkt an der Tragwand fixiert zu werden. Wenn also beim Anwender das Bedürfnis besteht, ein Ventil individuell mittels einer elektro-mechanischen Steckvorrichtung zu kontaktieren - die Steckvorrichtung wird hier in der Regel an einem elektrischen Kabel angebracht sein - genügt die Verwendung eines entsprechend gestalteten Ventilträgers, der wesentlich kostengünstiger für diese spezifischen Zweck bereitgestellt werden kann, als dies durch eine allgemeine Ausstattung sämtlicher Ventile mit einer Gewindeöffnung möglich wäre. Der Umstand, dass die Steckvorrichtung unabhängig vom Ventil an der Tragwand des Ventilträgers festlegbar ist, eröffnet auch die Möglichkeit, das Ventil zu montieren und zu demontieren, ohne in Bezug auf die elektrische Steckverbindung irgendwelche speziellen Maßnahmen vorzunehmen. Die elektrische Steckverbindung wird beim Ansetzen und beim Abnehmen des Ventils an die bzw. von der Bestückungsfläche automatisch hergestellt oder getrennt. Weiterhin ist vorteilhaft, dass die verwendete elektro-mechanische Steckvorrichtung ohne weiteres so ausgebildet sein kann, dass sie sich sowohl zur Anbringung an der Tragwand eignet als auch direkt an der Anschlusszone eines Ventils installierbar ist, das standardmäßig im Bereich der Anschlusszone mit einer Gewindeöffnung versehen ist. Die Befestigung der Steckvorrichtung an der Tragwand ist zweckmäßigerweise lösbar, so dass die Steckvorrichtung nach Bedarf abgenommen werden kann, um sie der genannten anderen Nutzungsform zuzuführen.

Vorteilhafte Weiterbildungen der Erfindung gehen aus den Unteransprüchen hervor.

Vorzugsweise ist die Tragwand ein einstückiger Bestandteil des Ventilträgers. Sein Werkstoff ist prinzipiell beliebig, aus Kostengründen wird man jedoch in der Regel ein Kunststoffmaterial einem Metall vorziehen. Denkbar wäre es auch, die Tragwand als eigenständige Komponente auszubilden, die an einem den mindestens einen Ventilträgerkanal enthaltenden Kanalkörper befestigt ist. Die einstückige Bauform hat allerdings fertigungstechnische Vorteile.

Das Gewinde der Gewindeöffnung kann direkt in der Tragwand selbst ausgebildet sein. Insbesondere wenn die Tragwand aus einem Kunststoffmaterial besteht, kann das Gewinde jedoch zur Verbesserung seiner Festigkeit auch Bestandteil eines insbesondere aus Metall bestehenden Gewindekörpers sein, der an der Tragwand fixiert ist, und der insbesondere ein bei der Spritzgießherstellung der Tragwand von dem Kunststoffmaterial umspritztes Einlegeteil sein kann.

Zur Fixierung der Steckvorrichtung ist zweckmäßigerweise eine einzige Befestigungsschraube vorhanden. Diese ist bevorzugt im Zentrum des Grundrisses der Steckvorrichtung angeordnet, so dass letztere gleichmäßig an die Tragwand angedrückt werden kann.

Die ersten Steckkontaktmittel sind insbesondere so ausgebildet, dass sie von dem Ventil wegragen. In der Gebrauchsposition des Ventils können sie dann durch die Tragwand hindurchgreifen und in die an der der Bestückungsfläche entgegengesetzten Rückseite der Tragwand angeordnete Steckvorrichtung zur Herstellung der elektrischen Steckverbindung eintauchen. Bevorzugt umfassen die ersten Steckkontaktmittel wenigstens zwei zum Beispiel als Kontaktfahnen oder stiftförmig ausgebildete Kontaktelemente, denen jeweils eine eigene Durchbrechung an der Tragwand zugeordnet sein kann, durch die sie hindurchgreifen können. Die Gewindeöffnung befindet sich hier zweckmäßigerweise in einem die Durchbrechungen voneinander trennenden Wandabschnitt der Tragwand.

Die Befestigungsschraube ist optimal zum Zwecke ihrer Betätigung zugänglich, wenn der sich rückseitig an die Tragwand anschließende, die Steckvorrichtung aufnehmende Montagebereich an der der Tragwand gegenüberliegenden Seite offen ist, also nicht von einem Abschnitt des Ventilträgers begrenzt ist. Auch lässt sich die Steckvorrichtung auf diese Weise sehr einfach mit einer Hand am Bestimmungsort platzieren und bei Bedarf auch wieder entfernen.

Vorzugsweise ist die Tragwand ein insbesondere einstückiger Bestandteil eines Tragarmes, der frei auskragend von einem den mindestens einen Ventilträgerkanal enthaltenden, als Kanalkörper bezeichneten Grundkörper wegragt. Der Tragarm kann nach Art einer Plattform ausgeführt sein, deren Abmessungen rechtwinkelig zu der Bestückungsfläche wesentlich geringer sind als diejenige des Kanalkörpers selbst.

Insbesondere wenn der Tragarm aus einem Kunststoffmaterial besteht, verfügt er zweckmäßigerweise über wenigstens einen Teil seiner Länge und vorzugsweise über seine gesamte Länge hinweg über einen U-förmigen Querschnitt. Die U-Öffnung weist hierbei von der Bestückungsfläche weg. Die Tragwand bildet den Verbindungssteg des U, von deren Randbereichen jeweils ein Stabilisierungsschenkel wegragt, der die Biegesteifigkeit der Tragwand erhöht. Von Vorteil ist es, wenn sich die Stabilisierungsschenkel an dem Kanalkörper abstützen, wobei sie - wie der gesamte Tragarm - einstückig mit dem Kanalkörper ausgebildet sein können.

Durch die beiden Stabilisierungsschenkel wird auch ein Zwischenraum begrenzt, in den die montierte Steckvorrichtung eintaucht und der bei Bedarf eine die Montage der Steckvorrichtung erleichternde Zentrierung bewirken kann.

Nachfolgend wird die Erfindung anhand der beiliegenden Zeichnung näher erläutert. In dieser zeigen:
- Figur 1: eine bevorzugte Ausführungsform der erfindungsgemäßen Ventilanordnung in einer perspektivischen Darstellung,
- Figur 2: die Ventilanordnung aus Figur 1 im voneinander getrennten Zustand von Ventil, Ventilträger und Steckvorrichtung,
- Figur 3: eine Seitenansicht der Ventilanordnung mit Blickrichtung gemäß Pfeil III aus Figur 1,
- Figur 4: eine Unteransicht der Ventilanordnung mit Blickrichtung gemäß Pfeil IV aus Figur 3,
- Figur 5: einen Längsschnitt durch die Ventilanordnung gemäß Schnittlinie V-V aus Figuren 4 und 7,
- Figur 6: eine Stirnansicht der Ventilanordnung mit Blickrichtung gemäß Pfeil VI aus Figur 3,
- Figur 7: einen Querschnitt durch die Ventilanordnung im Bereich der Tragwand gemäß Schnittlinie VII-VII aus Figuren 3 und 5, und

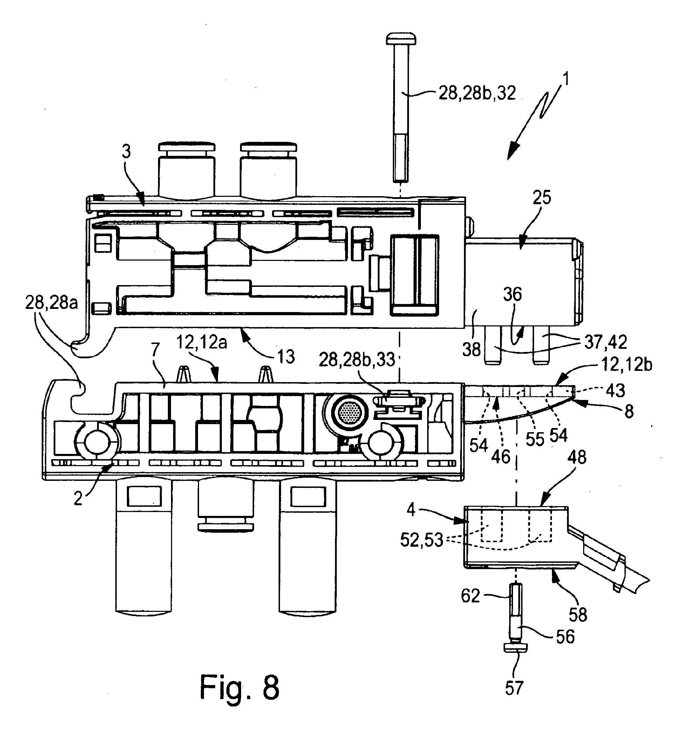

- Figur 8: eine Seitenansicht der in ihre wesentlichen Komponenten zerlegten Ventilanordnung mit Blickrichtung gemäß Pfeil VIII aus Figur 2.

Aus der Zeichnung ist eine insgesamt mit Bezugsziffer 1 bezeichnete Ventilanordnung ersichtlich, die als wesentliche Komponenten einen im Wesentlichen platten- oder blockförmigen Ventilträger 2, ein mit dem Ventilträger 2 zu einer Baugruppe kombinierbares Ventil 3 und eine für die elektrische Ansteuerung des Ventils 3 genutzte elektromechanische Steckvorrichtung 4 aufweist.

Der Ventilträger 2 hat vorzugsweise eine längliche Gestalt mit einer Längsachse 5. Er verfügt über einen mit mehreren internen, zur Fluidführung dienenden Ventilträgerkanälen 6 ausgestatteten, als Kanalkörper 7 bezeichneten Grundkörper, der quer zu der Längsachse 5 zweckmäßigerweise einen im Wesentlichen rechteckigen Querschnitt hat. Zur Einsparung von Material kann er wie abgebildet an verschiedenen Stellen ausgemagert sein.

An wenigstens einer der beiden in Achsrichtung der Längsachse 5 orientierten Stirnseiten des Kanalkörpers 7 ist ein Tragarm 8 angeordnet, der in Achsrichtung der Längsachse 5 von dem Kanalkörper 7 wegragt. Vorzugsweise ist der Tragarm 8 einstückig mit dem Kanalkörper 7 ausgebildet und besteht insbesondere aus dem gleichen Material wie dieser.

Eine der quer zur Längsachse 5 orientierten Seitenflächen des Ventilträgers 2 ist als bevorzugt eben gestaltete Bestückungsfläche 12 ausgebildet. Sie hat exemplarisch einen länglich-rechteckigen Umriss und erstreckt sich ununterbrochen über sowohl den Kanalkörper 7 als auch den Tragarm 8 hinweg.

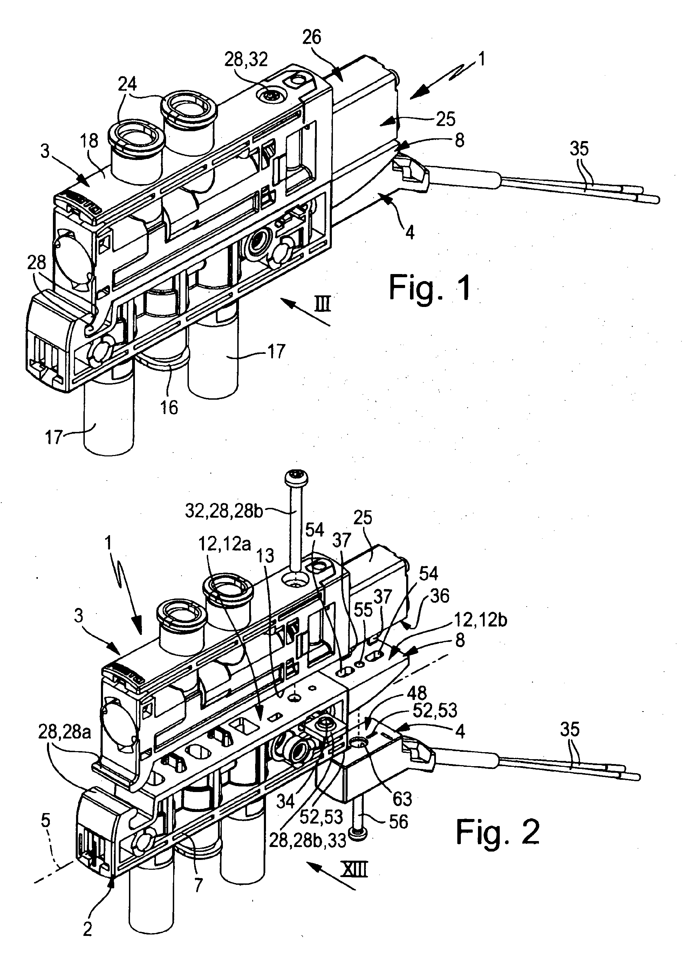

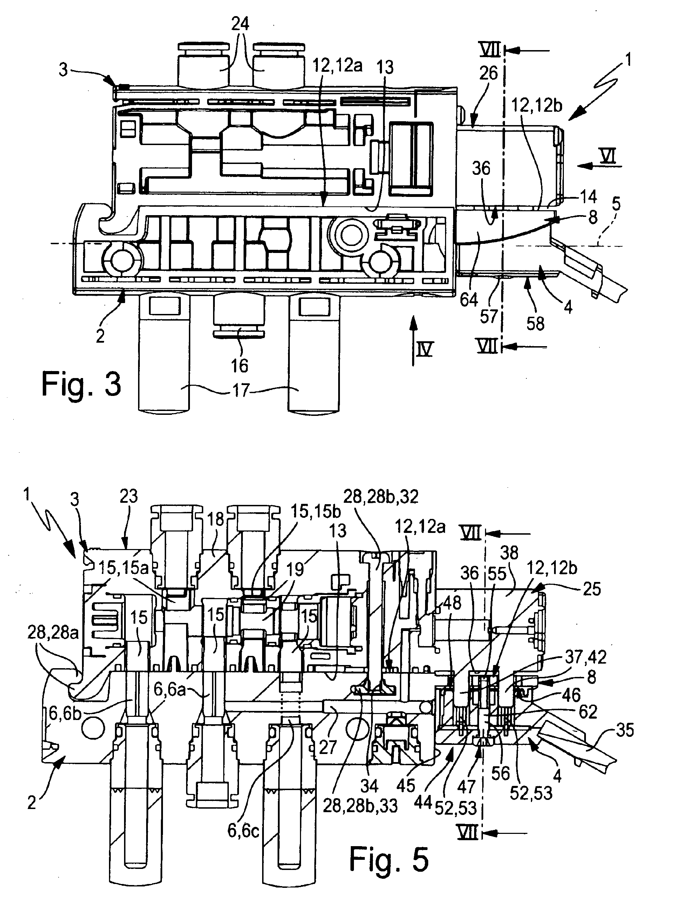

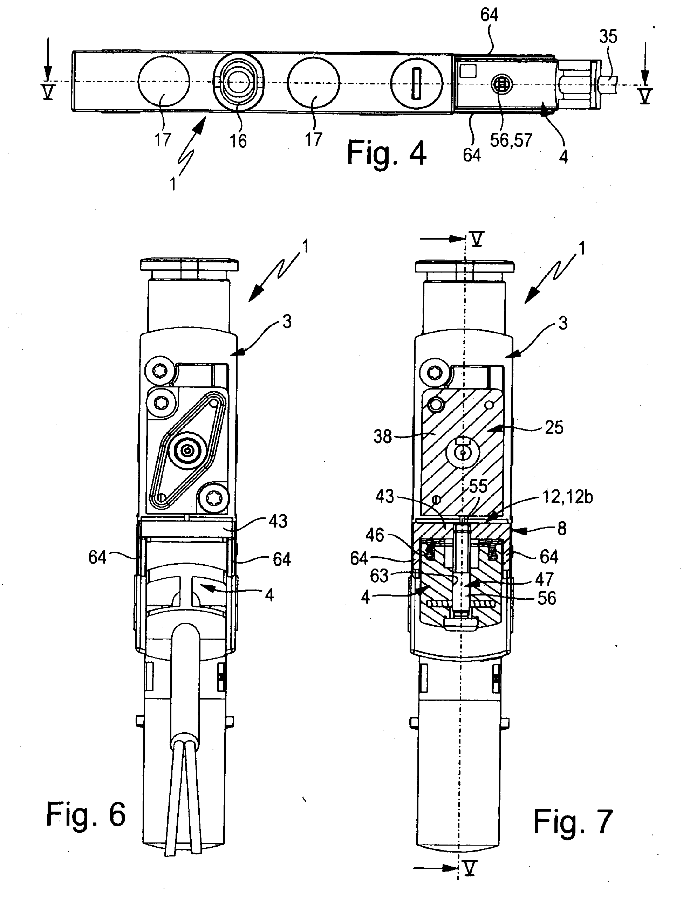

Das Ventil 3 ist unter Einnahme einer aus Figuren 1 und 3 bis 7 ersichtlichen Gebrauchsposition an dem Ventilträger 2 montierbar. In der Gebrauchsposition liegt es mit einer von einer seiner längsseitigen Außenflächen gebildeten Grundfläche 13 zumindest partiell an der Bestückungsfläche 12 an. Exemplarisch ergibt sich ein unmittelbarer Kontakt zwischen Ventil und Ventilträger 2 nur in dem sich am Kanalkörper befindenden ersten Flächenabschnitt 12a der Bestückungsfläche 12, während zu dem an dem Tragarm 8 ausgebildeten zweiten Flächenabschnitt 12b der Bestückungsfläche 12 ein - in der Regel relativ kleiner - Zwischenraum 14 vorhanden sein kann.

Im Innern des Ventils 3 sind mehrere Ventilkanäle 15 ausgebildet. Einige davon münden in dem dem Kanalkörper 7 gegenüberliegenden Bereich der Grundfläche 13 aus, und zwar derart, dass jede dieser Mündungen mit einer von mehreren in dem ersten Flächenabschnitt 12a der Bestückungsfläche 12 angeordneten Kanalmündungen der Ventilträgerkanäle 6 kommuniziert, wenn das Ventil 3 die Gebrauchsposition einnimmt. Bei den Ventilträgerkanälen 6 handelt es sich exemplarisch um einen über eine Anschlussvorrichtung 16 mit einer nicht weiter abgebildeten, insbesondere pneumatischen Druckquelle verbindbaren Speisekanal 6a und zwei, beispielsweise unter Zwischenschaltung von Schalldämpfern 17, mit der Atmosphäre oder einer sonstigen Drucksenke verbindbare Abführkanäle 6b, 6c.

Das Ventil 3 weist einen mit den Ventilkanälen 15 ausgestatteten Steuerteil 18 auf, in dessen Innern mindestens ein in verschiedenen Schaltstellungen positionierbares Ventilglied 19 angeordnet ist, das in der Lage ist, die mit den Ventilträgerkanälen 6 verbundenen Ventilkanäle 15 in unterschiedlichem Muster mit als Arbeitskanäle 15a, 15b ausgebildeten Ventilkanälen 15 zu verbinden. Die Arbeitskanäle 15a, 15b münden exemplarisch abseits der Grundfläche 13, insbesondere an der der Grundfläche 13 entgegengesetzten Oberseite 23 des Steuerteils 18 aus, wo sie unter Vermittlung von Anschlussvorrichtungen 24 und daran anschließbaren Fluidleitungen mit einem nicht weiter abgebildeten Verbraucher fluidisch verbindbar sind. Der Verbraucher ist beispielsweise ein fluidbetätigter Antrieb.

Zum Umschalten und wunschgemäßen Positionieren des Ventilgliedes 19 ist das Ventil 3 mit mindestens einer, exemplarisch mit genau einer elektrisch aktivierbaren Betätigungseinrichtung 25 ausgestattet. Die Betätigungseinrichtung 25 schließt sich stirnseitig an das Steuerteil 18 an, so dass sie in der Gebrauchsposition des Ventils 3 den an dem Tragarm 8 ausgebildeten zweiten Flächenabschnitt 12b der Bestückungsfläche 12 überdeckt. Die Betätigungseinrichtung 25 ist beim Ausführungsbeispiel eine Elektromagneteinrichtung, könnte aber beispielsweise auch ein piezoelektrischer Aktuator sein. Der Aktivierungszustand der Betätigungseinrichtung 25 bestimmt die Schaltstellung des Ventilgliedes 19 und mithin den Schaltzustand des Ventils 3.

Es könnte sich bei dem Ventil 3 um ein elektrisch direkt gesteuertes Ventil handeln. In diesem Fall würde ein durch elektrische Aktivierung antreibbares, bewegliches Aktorelement der Betätigungseinrichtung 25 direkt mechanisch auf das Ventilglied 19 einwirken. Die beim Ausführungsbeispiel realisierte bevorzugte Variante sieht hingegen vor, dass die Betätigungseinrichtung 25 Bestandteil einer Vorsteuerventileinrichtung 26 des Ventils 3 ist, mit deren Hilfe in an sich bekannter Weise eine gesteuerte Fluidbeaufschlagung des Ventilgliedes 19 durchgeführt werden kann, um dessen Schaltstellung zu verändern. Das hierzu verwendete Steuerfluid kann beispielsweise über einen sich teils im Ventilträger 2 und teils im Ventil 3 erstreckenden Vorsteuerkanal 27 von dem Speisekanal 6a abgezweigt werden. Auch eine direkte Einspeisung eines Vorsteuermediums ist möglich.

Befestigungsmittel 28 ermöglichen ein lösbares Befestigen des Ventils 3 in der Gebrauchsposition am Ventilträger 2. Diese Befestigungsmittel 28 wirken zwischen dem Steuerteil 18 und dem Kanalkörper 7. Exemplarisch beinhalten sie zum einen eine Hakenstruktur 28a und zum anderen eine Schraubverbindung 28b. Die Hakenstruktur 28a weist im Bereich der der Betätigungseinrichtung 25 entgegengesetzten Stirnseite des Ventils 3 angeordnete, ineinander einhakbare Hakenelemente auf, die Schraubverbindung 28b eine das Steuerteil 18 rechtwinkelig zu der Bestückungsfläche 12 durchsetzende Befestigungsschraube 32 und ein im Kanalkörper 7 angeordnetes, exemplarisch in einem separaten Mutterelement 33 ausgebildetes Befestigungsgewinde 34.

Zur Montage in der Gebrauchsposition wird durch schräges Ansetzen des Ventils 3 an den Ventilträger 2 die Hakenstruktur 28a in gegenseitigen Eingriff gebracht, anschließend wird das Ventil 3 bis zur Anlage an die Bestückungsfläche 12 an den Ventilträger 2 herangeschwenkt, und zum Abschluss wird zur festen Verankerung die Befestigungsschraube 32 in das Befestigungsgewinde 34 eingedreht und dadurch das Ventil 3 dem Ventilträger 2 lösbar fest verspannt.

Zwischen der Bestückungsfläche 12 und der Grundfläche 13 angeordnete Dichtungsmittel gewährleisten einen leckagefreien Fluidübertritt zwischen Ventilträger 2 und Ventil 3.

Die elektrische Aktivierung der Betätigungseinrichtung 25 erfolgt von außen her durch eine nicht weiter abgebildete elektronische Steuereinrichtung, die die elektrischen Betätigungssignale über elektrische Leiter 35 in die Ventilanordnung 1 einspeist, wobei die elektrischen Leiter 35 an die eingangs erwähnte Steckvorrichtung 4 angeschlossen sind. Die elektrischen Leiter 35 können in mindestens einem flexiblen Kabel zusammengefasst sein. Sie sind entweder wie abgebildet fest mit der Steckvorrichtung 4 verdrahtet oder können durch geeignete Schnittstellenmittel lösbar an der Steckvorrichtung 4 angebracht sein.

Die Betätigungseinrichtung 25 weist in einer in der Gebrauchsstellung des Ventils 3 dem am Tragarm 8 angeordneten zweiten Flächenabschnitt 12b der Bestückungsfläche 12 gegenüberliegenden und zugewandten Anschlusszone 36 erste Steckkontaktmittel 37 auf. Die Anschlusszone 36 befindet sich an der dem zweiten Flächenabschnitt 12b zugewandten Außenfläche eines beispielsweise quaderförmigen Grundkörpers 38 der Betätigungseinrichtung 25, von dem die ersten Steckkontaktmittel 37 in Richtung zum Tragarm 8 wegragen. Die ersten Steckkontaktmittel 37 bestehen beim Ausführungsbeispiel aus zwei als Kontaktfahnen ausgebildeten Kontaktelementen 42, die zweckmäßigerweise axial beabstandet auf einer zu der Längsachse 5 parallelen Linie angeordnet sind. Im Innern des Grundkörpers 38 stehen die Kontaktelemente 42 mit den elektrischen Komponenten der Betätigungseinrichtung 25 in elektrischer Verbindung.

Der Tragarm 8 verfügt über eine den zweiten Flächenabschnitt 12b der Bestückungsfläche 12 aufweisende, bevorzugt plattenförmig ausgebildete Tragwand 43. Der zweite Flächenabschnitt 12b ist von einer der beiden großflächigen Außenflächen der Tragwand 43 gebildet. Ihre in der Normalenrichtung der Bestückungsfläche 12 gemessene Dicke ist wesentlich geringer als diejenige des entsprechend gemessenen Kanalkörpers 7. Auf diese Weise ergibt sich im Bereich der der Bestückungsfläche 12 entgegengesetzten Rückseite der Tragwand 43 ein offener Montagebereich 44, der lediglich durch eine L-förmige Wandfläche begrenzt ist, die durch die Rückseite des Tragarmes 8 und die sich an den Tragarm 8 anschließende Stirnfläche 45 des Kanalkörpers 7 gebildet ist.

Der Montagebereich 44 dient zur Aufnahme der Steckvorrichtung 4. Selbige ist lösbar an die dem zweiten Flächenabschnitt 12b entgegengesetzte, dem Montagebereich 44 zugewandte Rückseite 46 der Tragwand 43 angesetzt und durch Schraubverbindungsmittel 47 lösbar direkt an der Tragwand 43 fixiert.

Die derart fixierte Steckvorrichtung 4 stützt sich mit einer Anschlussfläche 48 an der als Rückseite 46 bezeichneten, dem zweiten Flächeabschnitt 12b abgewandten Fläche der Tragwand 43 ab.

Die Steckvorrichtung 4 ist mit zweiten Steckkontaktmitteln 52 ausgestattet, die mit den elektrischen Leitern 35 verbunden sind. Sie sind von der Anschlussfläche 48 her zugänglich und beim Ausführungsbeispiel als vertiefte Steckaufnahmen 53 ausgebildet, deren Anzahl und Verteilung derjenigen der vom Ventil 3 wegragenden Kontaktelemente 42 entspricht.

In der Tragwand 43 ist eine der Anzahl der Kontaktelemente 42 entsprechende Anzahl von Durchbrechungen 54 ausgebildet. Jede Durchbrechung 54 fluchtet mit einem der Kontaktelemente 42, so dass letztere in der Lage sind, bei in Gebrauchsposition befindlichem Ventil 3 durch die Durchbrechungen 54 hindurchzugreifen und in den sich rückseitig an die Tragwand 43 anschließenden Montagebereich 44 hineinzuragen. Dort tauchen sie in jeweils eine der Steckaufnahmen 53 der Steckvorrichtung 4 ein, die ebenfalls fluchtend mit den Durchbrechungen 54 ausgerichtet sind, so dass auf diese Weise eine elektrische Steckverbindung zwischen den zu der Betätigungseinrichtung 25 gehörenden ersten Steckkontaktmitteln 37 und den zur Steckvorrichtung 4 gehörenden zweiten Steckkontaktmitteln 52 hergestellt ist.

Bei durch die Schraubverbindungsmittel 47 an der Tragwand 43 befestigter Steckvorrichtung 4 kann das Ventil 3 beliebig vom Ventilträger 2 abgenommen oder an den Ventilträger 2 angesetzt werden, wobei jeweils die vorgenannte elektrische Steckverbindung aufgehoben oder hergestellt wird, ohne eine Manipulation an der Steckvorrichtung 4 vornehmen zu müssen.

Die Schraubverbindungsmittel 47 umfassen in vorteilhafter Weise eine an der Tragwand 43 angeordnete Gewindeöffnung 55 und eine sich an der Steckvorrichtung 4 abstützende Befestigungsschraube 56. Die Gewindeöffnung 55 befindet sich in dem von der Anschlusszone 36 der Betätigungseinrichtung 25 überdeckten Bereich der Tragwand 43 und ist beim Ausführungsbeispiel unmittelbar in der Tragwand 43 ausgebildet. Es handelt sich zweckmäßigerweise um ein mit einem Innengewinde versehenes Durchgangsloch der Tragwand 43.

Die Befestigungsschraube 56 durchsetzt die Steckvorrichtung 4 in ihrer Höhenrichtung, also rechtwinkelig zu der Anschlussfläche 48, wobei sie sich mit einem Schraubenkopf 57 an der der Anschlussfläche 48 entgegengesetzten rückseitigen Außenfläche 58 des Gehäuses der Steckvorrichtung 4 abstützt und mit einem an der Anschlussfläche 48 herausragenden Gewindeschaft 62 mit der Gewindeöffnung 55 in Gewindeeingriff steht. Durch entsprechendes Festziehen der Befestigungsschraube 56 kann die Steckvorrichtung 4 fest mit der Rückseite 46 der Tragwand 43 verspannt werden.

Soll trotz aus Kunststoffmaterial bestehender Tragwand 43 eine besonders hohe Festigkeit für das Innengewinde der Gewindeöffnung 55 gewährleistet werden, kann die Gewindeöffnung 55 auch durch einen separaten Gewindekörper bereitgestellt werden, der an oder in der Tragwand 43 befestigt ist. Es kann sich insbesondere um ein bei der Spritzgießherstellung des Ventilträgers 2 vom Kunststoffmaterial umspritztes metallisches Einlegeteil handeln.

Insbesondere aus Figur 2 ist ersichtlich, dass die Steckvorrichtung 4 im Bereich ihrer Anschlussfläche 48 vorzugsweise einen rechteckigen Grundriss aufweist. Eine den Durchgriff der Befestigungsschraube 56 ermöglichende, die Steckvorrichtung 4 in Höhenrichtung durchsetzende Durchtrittsöffnung 63 tritt insbesondere im Zentrum des rechteckigen Grundrisses der Anschlussfläche 48 aus, so dass die Gewindeöffnung 55 direkt mit ihr fluchtet.

Wie man wiederum der Figur 2 ersehen kann, ist die Gewindeöffnung 55 zweckmäßigerweise abstandsmittig zwischen den beim Ausführungsbeispiel vorhandenen zwei Durchbrechungen 54 der Tragwand 43 angeordnet.

Aufgrund des Umstandes, dass der Montagebereich 44 auf der der Tragwand 43 gegenüberliegenden Seite offen ist, kann von dorther problemlos ein Schraubwerkzeug an den Schraubenkopf 57 zur Betätigung der Befestigungsschraube 56 angesetzt werden. Auch das Ansetzen der Steckvorrichtung 4 an die Tragwand 43 sowie ihr bedarfsgemäßes Abnehmen von der Tragwand 43 wird auf diese Weise vereinfacht, zumal zweckmäßigerweise auch noch die der Stirnfläche 45 gegenüberliegende Seite des Montagebereichtes 44 offen ist und dadurch ein problemloser seitlicher Abgang der elektrischen Leiter 45 realisierbar ist.

Da die Schraubverbindung 47 nur zwischen der Steckvorrichtung 4 und der Tragwand 43 stattfindet, kann direkt am Ventil 3 eine das Einschrauben der Befestigungsschraube 56 ermöglichende Gewindeöffnung entfallen. Sie ist beim Ausführungsbeispiel aus Kostengründen eingespart worden.

Insbesondere um die Festigkeit der Tragwand 43 zu erhöhen, aber auch um die Position der montierten Steckvorrichtung 4 zu stabilisieren, verfügt der Tragarm 8 zweckmäßigerweise an den beiden längsseitigen Seitenrändern der Tragwand 43 über je einen von der Bestückungsfläche 12 wegragenden Stabilisierungsschenkel 64. Auf diese Weise hat der Tragarm 8 im Bereich der Stabilisierungsschenkel 64 einen U-förmigen Querschnitt mit dem Montagebereich 44 zugewandter U-Öffnung. Exemplarisch erstrecken sich die Stabilisierungsschenkel 64 über die gesamte Länge der Tragwand 43, sie können jedoch auch kürzer ausfallen. Von Vorteil ist außerdem, wenn die rechtwinkelig zur Bestückungsfläche 12 gemessene Höhe der Stabilisierungsschenkel 64 mit zunehmender Entfernung vom Kanalkörper 7 abnimmt. Es kann insbesondere ein abgerundeter Randverlauf vorliegen.

Die Stabilisierungschenkel 64 stützen sich zweckmäßigerweise einenends an dem Kanalkörper 7 ab, wobei sie zweckmäßigerweise einstückig mit dem letzteren ausgeführt sind. Gemeinsam mit den beiden Stabilisierungsschenkeln 64 begrenzt die Tragwand 43 in dem Montagebereich 44 einen Zwischenraum, in den die montierte Steckvorrichtung 4 zumindest teilweise eintaucht. Sie erfährt dadurch eine seitliche Stabilisierung und Abstützung, so dass Beschädigungen der ersten und zweiten Steckkontaktmittel 37, 52 vermieden werden, falls durch externe Einflüsse eine unerwünschte Querkraft in die Steckvorrichtung 4 eingeleitet werden sollte.

Bei der Steckvorrichtung 4 handelt es sich zweckmäßigerweise um einen üblichen sogenannten Ventilstecker, wie er Verwendung findet, um direkt eine Betätigungseinrichtung eines Ventils zu kontaktieren, in deren Anschlusszone unmittelbar selbst eine Gewindeöffnung zum Einschrauben der Befestigungsschraube 56 ausgebildet ist. Die Steckvorrichtung 4 ist somit vorzugsweise universell verwendbar.

Exemplarisch ist der Ventilträger 2 zur Bestückung mit nur einem einzigen Ventil 3 ausgebildet. Er könnte jedoch auch mehrere Bestückungsflächen 12 zur gleichzeitigen Montage mehrerer Ventile 3 aufweisen.

Es besteht ferner die Möglichkeit, den Ventilträger 2, insbesondere an einander entgegengesetzten Stirnseiten, mit jeweils einem Tragarm 8 der geschilderten Art auszustatten, so dass Ventile 3 kontaktierbar sind, die an einander entgegengesetzten Stirnseiten mit je einer Betätigungseinrichtung 25 ausgestattet sind.

Die Ventilanordnung des Ausführungsbeispiels stellt eine autark nutzbare Ventileinheit dar. Prinzipiell wäre es jedoch möglich, den Ventilträger 2 so auszubilden, dass mindestens einer der Ventilträgerkanäle 6 den Kanalkörper 7 quer durchsetzt, so dass durch Aneinanderreihung mehrerer Ventilträger 2 eine modulare Ventilbaugruppe zusammengesetzt werden kann. Seitens des Ventils 3 besteht der Vorteil, dass es wahlweise als Komponente einer mit integrierten elektrischen Signalverteilungsmitteln ausgestatteten Ventilbaugruppe oder, in Verbindung mit dem beschriebenen Ventilträger 2, als Einzelventil nutzbar ist. Für den Anwender hat dies den Vorteil, dass er für unterschiedliche Anwendungsfälle nur eine Ventilart bereitstellen muss, was entsprechende Einsparungen in der Logistik, in der Lagerhaltung, im Reparaturfall und bei der Produktschulung mit sich bringt.

## Patentansprüche

1. Ventilanordnung, mit mindestens einem Ventilträger (2), der eine Bestückungsfläche (12) aufweist und in dem mindestens ein zur Bestückungsfläche (12) ausmündender Ventilträgerkanal (6) verläuft, mit mindestens einem Ventil (3), das mindestens eine elektrisch aktivierbare Betätigungs-einrichtung (25) mit in einer Anschlusszone (36) außen am Ventil (3) angeordneten ersten Steckkontaktmitteln (37) aufweist und das derart in einer Gebrauchsposition an der Bestückungsfläche (12) montierbar ist, dass mindestens ein in ihm verlaufender Ventilkanal (15) mit mindestens einem Ventilträgerkanal (6) verbunden ist und zugleich die ersten Steckkontaktmittel (37) mit zweiten Steckkontaktmitteln (52) in Eingriff stehen, die Bestandteile einer mit elektrischen Leitern (35) verbundenen oder verbindbaren elektromechanischen Steckvorrichtung (4) sind, die auf der der Bestückungsfläche (12) entgegengesetzten Seite eines Wandabschnittes des Ventilträgers (2) am Ventilträger (2) fixiert ist, **dadurch gekennzeichnet, dass** der Wandabschnitt als die Steckvorrichtung (4) unmittelbar tragende Tragwand (43) ausgebildet ist, an deren von der Bestückungsfläche (12) abgewandte Rückseite (46) die Steckvorrichtung (4) angesetzt ist und die in dem in der Gebrauchsposition des Ventils (3) von dessen Anschlusszone (36) überdeckten Bereich mindestens eine Gewindeöffnung (55) aufweist, in die eine Befestigungsschraube (56) eingreift, mittels der die Steckvorrichtung (4) an der Tragwand (43) gehalten ist.

2. Ventilanordnung nach Anspruch 1, **dadurch gekennzeichnet, dass** die Tragwand (43) ein einstückiger Bestandteil des Ventilträgers (2) ist und zweckmäßigerweise aus einem Kunststoffmaterial besteht.

3. Ventilanordnung nach Anspruch 1 oder 2, **dadurch gekennzeichnet, dass** das Gewinde der die Tragwand (43) zweckmäßigerweise durchsetzenden Gewindeöffnung (55) direkt in der Tragwand (43) selbst ausgebildet ist.

4. Ventilanordnung nach einem der Ansprüche 1 bis 3, **dadurch gekennzeichnet, dass** die Befestigungsschraube (56) die Steckvorrichtung (4) durchsetzt, insbesondere im Zentrum des bevorzugten rechteckigen Grundrisses der Steckvorrichtung (4), wobei sie einen die Steckvorrichtung (4) beaufschlagenden Schraubenkopf (57) und einen in die Gewindeöffnung (55) eingeschraubten Gewindeschaft (62) aufweist.

5. Ventilanordnung nach einem der Ansprüche 1 bis 4, **dadurch gekennzeichnet, dass** die ersten Steckkontaktmittel (37) bei in Gebrauchsposition befindlichen Ventil (3) durch die Tragwand (43) hindurchgreifen und zur Kontaktierung der zweiten Steckkontaktmittel (52) in die an der Rückseite (46) der Tragwand (43) angeordnete Steckvorrichtung (4) eintauchen.

6. Ventilanordnung nach einem der Ansprüche 1 bis 5, **dadurch gekennzeichnet, dass** die ersten Steckkontaktmittel (37) mehrere in der Anschlusszone (36) von dem Ventil (3) wegragende, insbesondere als Kontaktfahnen ausgebildete Kontaktelemente (42) aufweisen und die Tragwand (43) für den Durchgriff der Kontaktelemente (42) jeweils eine Durchbrechung (54) aufweist, wobei die Gewindeöffnung (55) zweckmäßigerweise zwischen den Durchbrechungen (54) angeordnet ist.

7. Ventilanordnung nach einem der Ansprüche 1 bis 6, **dadurch gekennzeichnet, dass** die Tragwand (43) rückseitig einen Montagebereich (44) begrenzt, in dem die an der Tragwand (43) fixierte Steckvorrichtung (4) angeordnet ist und der zumindest an der der Tragwand (43) gegenüberliegenden Seite offen ist.

8. Ventilanordnung nach einem der Ansprüche 1 bis 7, **dadurch gekennzeichnet, dass** die Tragwand (43) Bestandteil eines von einem den mindestens einen Ventilträgerkanal (6) enthaltenden Kanalkörper (7) der Ventilträgers (2) wegragenden, frei endenden Tragarmes (8) ist.

9. Ventilanordnung nach Anspruch 8, **dadurch gekennzeichnet, dass** der Tragarm (8) über wenigstens einen Teil seiner Länge einen U-förmigen Querschnitt aufweist, indem von den beiden längsseitigen Rändern der Tragwand (43) jeweils ein Stabilisierungsschenkel (64) in die der Bestückungsfläche (12) entgegengesetzte Richtung wegragt.

10. Ventilanordnung nach Anspruch 9, **dadurch gekennzeichnet, dass** sich die Stabilisierungsschenkel (64) an dem Kanalkörper (7) abstützen, insbesondere indem sie einstückig mit dem Kanalkörper (7) ausgebildet sind.

11. Ventilanordnung nach Anspruch 9 oder 10, **dadurch gekennzeichnet, dass** die montierte Steckvorrichtung (4) zwischen die beiden Stabilisierungsschenkel (64) eintaucht und zweckmäßigerweise von den Stabilisierungselementen (64) seitlich abgestützt ist.

12. Ventilanordnung nach einem der Ansprüche 1 bis 11, **dadurch gekennzeichnet, dass** das Ventil (3) im Bereich der Anschlusszone (36) gewindeöffnungslos und insbesondere mit einer geschlossenen Oberfläche ausgebildet ist.

13. Ventilanordnung nach einem der Ansprüche 1 bis 12, **dadurch gekennzeichnet, dass** das Ventil (3) in der Gebrauchsposition ausschließlich durch Befestigungsmittel (28) am Ventilträger (2) fixiert ist, die weder direkt an der Betätigungseinrichtung (25) noch an der Tragwand (43) angreifen.

14. Ventilanordnung nach einem der Ansprüche 1 bis 13, **dadurch gekennzeichnet, dass** der Ventilträger (2) zur Bestückung mit stets nur einem einzigen Ventil (3) ausgebildet ist.

15. Ventilanordnung nach einem der Ansprüche 1 bis 14, **dadurch gekennzeichnet, dass** an der Bestückungsfläche (12) mehrere Ventilträgerkanäle (6) ausmünden, von denen wenigstens einer ein mit einer Druckquelle verbindbarer Speisekanal (6a) und wenigstens ein weiterer ein mit einer Drucksenke verbindbarer Abführkanal (6b, 6c) ist, und die jeweils mit einem ventilkanal (15) des in Gebrauchsposition befindlichen Ventils (3) verbunden sind, wobei mindestens ein weiterer Ventilkanal (15, 15a, 15b) ein mit einem anzusteuernden Verbraucher verbindbarer Arbeitskanal ist.

16. Ventilanordnung nach einem der Ansprüche 1 bis 15, **dadurch gekennzeichnet, dass** die Betätigungseinrichtung (25) eine Elektromagneteinrichtung ist, bei der es sich zweckmäßigerweise um einen Bestandteil einer Vorsteuerventileinrichtung (26) des Ventils (3) handelt.

## Claims

1. Valve assembly, with at least one valve carrier (2) which has a mounting surface (12) and in which runs at least one valve carrier passage (6) opening out at the mounting surface (12), with at least one valve (3) which has at least one electrically actuable actuating device (25) with first plug contact means (37) located in a connection zone (36) on the outside of the valve (3), and which may be mounted in a position of use on the mounting surface (12) in such a way that at least one valve passage (15) running in it is connected to at least one valve carrier passage (6) and at the same time the first plug contact means (37) engage with second plug contact means (52) which are parts of an electro-mechanical plug and socket device (4) which is or may be connected by electrical conductors (35) and is fixed to the valve carrier (2) on the side of a wall section of the valve carrier (2) opposite the mounting surface (12), **characterised in that** the wall section is designed as a supporting wall (43) directly supporting the plug and socket device (4) and at the rear (46) of which, facing away from the mounting surface (12), the plug and socket device (4) is attached, and which supporting wall in the area covered by the connection zone (36) in the position of use of the valve (3) has at least one threaded orifice (55) in which there engages a fixing screw (56), by means of which the plug and socket device (4) is held to the supporting wall (43).

2. Valve assembly according to claim 1, **characterised in that** the supporting wall (43) is a one-piece part of the valve carrier (2), expediently made of a plastic material.

3. Valve assembly according to claim 1 or 2, **characterised in that** the thread of the threaded orifice (55) expediently passing through the supporting wall (43) is formed directly in the supporting wall (43) itself.

4. Valve assembly according to any of claims 1 to 3, **characterised in that** the fixing screw (56) passes through the plug and socket device (4), in particular in the centre of the preferably rectangular outline of the plug and socket device (4), wherein it has a screw head (57) pressure-loading the plug and socket device (4) and a threaded shank (62) screwed into the threaded orifice (55).

5. Valve assembly according to any of claims 1 to 4, **characterised in that** the first plug contact means (37), with the valve (3) in the position of use, reach through the supporting wall (43) and, to contact the second plug contact means (52), dip into the plug and socket device (4) mounted at the rear (46) of the supporting wall (43).

6. Valve assembly according to any of claims 1 to 5, **characterised in that** the first plug contact means (37) have several contact elements (42) in the connection zone (36) extending away from the valve (3), in particular in the form of contact lugs, and the supporting wall (43) has in each case a through hole (54) for the passage of the contact elements (42), wherein the threaded orifice (55) is expediently provided between the through holes (54).

7. Valve assembly according to any of claims 1 to 6 **characterised in that**, at the rear, the supporting wall (43) bounds a mounting area (44) in which the plug and socket device (4) fixed to the supporting wall (43) is mounted and is open at least on the side opposite the supporting wall (43).

8. Valve assembly according to any of claims 1 to 7, **characterised in that** the supporting wall (43) is part of a free ending support arm (8) extending away from the passage body (7) of the valve carrier (2) containing at least one valve carrier passage (6).

9. Valve assembly according to claim 8, **characterised in that** the support arm (8) has over at least part of its length a U-shaped cross-section, since a stabilising leg (64) extends away in the direction opposite to the mounting surface (12), from each of the two long-side edges of the supporting wall (43).

10. Valve assembly according to claim 9, **characterised in that** the stabilising legs (64) rest on the passage body (7), in particular forming an integral part of the passage body (7).

11. Valve assembly according to claim 9 or 10, **characterised in that** the fitted plug and socket device (4) dips between the two stabilising legs (64) and is expediently supported by the stabilising elements (64) at the side.

12. Valve assembly according to any of claims 1 to 11 **characterised in that**, in the area of the connection zone (36), the valve (3) has no threaded orifice and in particular has a closed surface.

13. Valve assembly according to any of claims 1 to 12, **characterised in that** the valve (3) in the position of use is fixed to the valve carrier (2) solely by fastening means (28) which act neither directly on the actuating device (25) nor on the supporting wall (43).

14. Valve assembly according to any of claims 1 to 13, **characterised in that** the valve carrier (2) is designed for always being equipped with only a single valve (3).

15. Valve assembly according to any of claims 1 to 14 **characterised in that**, at the mounting surface (12) several valve carrier passages (6) open out, of which at least one is a feed passage (6a) which may be connected to a compressed air source and at least one other is a discharge passage (6b, 6c) which may be connected to a pressure sink, with each being connected to a valve passage (15) of the valve (3) in its position of use, wherein at least one other valve passage (15, 15a, 15b) is an operating passage which may be connected to a load to be controlled.

16. Valve assembly according to any of claims 1 to 15, **characterised in that** the actuating device (25) is an electromagnetic device, involving expediently a part of a pilot valve device (26) of the valve (3).

## Revendications

1. Agencement de vanne avec au moins un support de vanne (2) qui présente une surface d'équipement (12) et dans lequel s'étend au moins un canal de support de vanne (6) débouchant vers la surface d'équipement (12), avec au moins une vanne (3), qui présente au moins un dispositif d'actionnement (25) activable électriquement avec des premiers moyens de contact à fiche (37) disposés dans une zone de raccordement (36) à l'extérieur sur la vanne (3) et qui peut être montée dans une position d'utilisation sur la surface d'équipement (12) de telle manière qu'au moins un canal de vanne (15) s'étendant dans celle-ci soit relié à au moins un canal de support de vanne (6) et en même temps les premiers moyens de contacts à fiche (37) soient en engagement avec des seconds moyens de contacts à fiche (52) qui sont des constituants d'un dispositif d'enfichage (4) électromécanique qui est relié ou peut être relié avec des conducteurs électriques (35) et qui est fixé au niveau du support de vanne (2) sur le côté opposé à la surface d'équipement (12) d'une section de paroi du support de vanne (2), **caractérisé en ce que** la section de paroi est réalisée comme une paroi porteuse (43) portant directement le dispositif d'enfichage (4), sur le côté arrière (46) éloigné de la surface d'équipement (12) duquel est placé le dispositif d'enfichage (4) et qui présente dans la zone recouverte dans la position d'utilisation de la vanne (3) par sa zone de raccordement (36) au moins une ouverture filetée (55), dans laquelle une vis de fixation (56) s'engage, à l'aide de laquelle le dispositif d'enfichage (4) est maintenu sur la paroi porteuse (43).

2. Agencement de vanne selon la revendication 1, **caractérisé en ce que** la paroi porteuse (43) est un élément d'un seul tenant du support de vanne (2) et se compose d'un matériau plastique adapté.

3. Agencement de vanne selon la revendication 1 ou 2, **caractérisé en ce que** le filet de l'ouverture filetée (55) traversant de manière appropriée la paroi porteuse (43) est directement réalisé dans la paroi porteuse (43) même.

4. Agencement de vanne selon l'une quelconque des revendications 1 à 3, **caractérisé en ce que** la vis de fixation (56) traverse le dispositif d'enfichage (4), en particulier dans le centre de la projection horizontale de préférence rectangulaire du dispositif d'enfichage (4), celle-ci présentant une tête de vis (57) alimentant le dispositif d'enfichage (4) et une tige filetée (62) vissée dans l'ouverture filetée (55).

5. Agencement de vanne selon l'une quelconque des revendications 1 à 4, **caractérisé en ce que** les premiers moyens de contact à fiche (37) traversent la paroi porteuse (43) lorsque la vanne (3) se trouve dans la position d'utilisation et pénètrent pour le contact avec les seconds moyens de contact à fiche (52) dans le dispositif d'enfichage (4) disposé sur le côté arrière (46) de la paroi porteuse (43).

6. Agencement de vanne selon l'une quelconque des revendications 1 à 5, **caractérisé en ce que** les premiers moyens de contact à fiche (37) présentent plusieurs éléments de contact (42) réalisés en particulier comme des talons de contact, dépassant de la vanne (3) dans la zone de raccordement (36) et la paroi porteuse (43) présente pour le passage des éléments de contact (42) respectivement un percement (54), l'ouverture filetée (55) étant disposée de manière appropriée entre les percements (54).

7. Agencement de vanne selon l'une quelconque des revendications 1 à 6, **caractérisé en ce que** la paroi porteuse (43) délimite côté arrière une zone de montage (44), dans laquelle le dispositif d'enfichage (4) fixé sur la paroi porteuse (43) est disposé et qui est ouverte au moins sur le côté opposé à la paroi porteuse (43).

8. Agencement de vanne selon l'une quelconque des revendications 1 à 7, **caractérisé en ce que** la paroi porteuse (43) fait partie d'un bras porteur (8) se terminant librement, dépassant d'un corps de canal (7) du support de vanne (2) contenant l'au moins un canal de support de vanne (6).

9. Agencement de vanne selon la revendication 8, **caractérisé en ce que** le bras porteur (8) présente sur au moins une partie de sa longueur une section transversale en forme de U, **en ce que** respectivement une branche de stabilisation (64) dépasse des deux bords côté longueur de la paroi porteuse (43) dans la direction opposée à la surface d'équipement (12).

10. Agencement de vanne selon la revendication 9, **caractérisé en ce que** les branches de stabilisation (64) s'appuient contre le corps de canal (7), en particulier **en ce qu'**elles sont réalisées d'un seul tenant avec le corps de canal (7).

11. Agencement de vanne selon la revendication 9 ou 10, **caractérisé en ce que** le dispositif d'enfichage monté (4) pénètre entre les deux branches de stabilisation (64) et est en appui latéralement de manière appropriée par les éléments de stabilisation (64).

12. Agencement de vanne selon l'une quelconque des revendications 1 à 11, **caractérisé en ce que** la vanne (3) est réalisée dans la zone de la zone de raccordement (36) sans ouverture filetée et en particulier avec une surface fermée.

13. Agencement de vanne selon l'une quelconque des revendications 1 à 12, **caractérisé en ce que** la vanne (3) est fixée dans la position d'utilisation exclusivement par des moyens de fixation (28) sur le support de vanne (2) qui n'agissent pas directement sur le dispositif d'actionnement (25) ni sur la paroi porteuse (43).

14. Agencement de vanne selon l'une quelconque des revendications 1 à 13, **caractérisé en ce que** le support de vanne (2) est réalisé pour l'équipement toujours avec une seule vanne (3).

15. Agencement de vanne selon l'une quelconque des revendications 1 à 14, **caractérisé en ce que** plusieurs canaux de support de vanne (6) débouchent sur la surface d'équipement (12), dont au moins un est un canal d'alimentation (6a) pouvant être relié à une source de pression et au moins un autre est un canal d'évacuation (6b, 6c) pouvant être relié à un réservoir de pression, et qui sont respectivement reliés à un canal (15) de la vanne (3) se trouvant dans la position d'utilisation, au moins un autre canal de vanne (15, 15a, 15b) étant un canal de travail pouvant être relié à un récepteur à commander.

16. Agencement de vanne selon l'une quelconque des revendications 1 à 15, **caractérisé en ce que** le dispositif d'actionnement (25) est un dispositif électromagnétique, pour lequel il s'agit de manière appropriée d'un élément d'un dispositif de vanne de précommande (26) de la vanne (3).
